# DEMANDE DE BREVET EUROPEEN

(11) **EP 1 162 818 A1**
(43) Date de publication de la demande: **12.12.2001**
(21) Numéro de dépôt: 01401439.3
(22) Date de dépôt: 01.06.2001
(51) Int. Cl.: H04M 19/08, H04M 11/06

(54) **Dispositif adapteur de courant pour modem et modem doté d'un tel dispositif**

(30) Priorité: 06.06.2000 FR 0007241
(71) Demandeur: FRANCE TELECOM, 75015 Paris (FR)
(72) Inventeur: Bourieau, Maurice, 44880 Sautron (FR); Junker, Christian, 95170 Deuil la Barre (FR)
(74) Mandataire: Habasque, Etienne Joel Jean-François

(57) **Abrégé**

Ce dispositif adaptateur de courant pour modem comporte des premier et deuxième connecteurs (20, 22) de raccordement du dispositif à une prise téléphonique et au modem, des moyens électriquement conducteurs à résistance variable de transfert de courant raccordés aux premier et deuxième connecteurs et des moyens de réglage (24) de la résistance des moyens de transfert de courant.

## Description

La présente invention se rapporte à un dispositif adaptateur de courant pour modem, et à un modem doté d'un tel dispositif.

Elle porte en particulier sur un dispositif adaptateur de courant pour modem intégré ou non à un micro-ordinateur.

Généralement, les modems sont dotés, en entrée, de moyens de réglage de courant capables de maintenir le niveau de courant fourni aux circuits de modulation et de démodulation du modem à l'intérieur d'une plage dans laquelle le modem peut assurer efficacement sa fonction.

Dans certains cas, par exemple lorsque l'usager est situé à proximité d'un central téléphonique, le courant circulant sur la ligne téléphonique peut atteindre une valeur telle que le modem ne peut plus compenser efficacement la valeur du courant, ce qui est susceptible d'engendrer des déconnections intempestives lorsqu'il est raccordé au réseau Internet et de provoquer l'affichage de caractères erronés sur l'écran de l'ordinateur.

Par exemple, la valeur maximale du courant que le modem est capable de réguler est de l'ordre de 35 mA.

Certains modems externes sont capables d'assurer une régulation efficace du courant disponible sur la ligne téléphonique. Ils sont toutefois d'un coût prohibitif.

Le but de l'invention est de pallier ces inconvénients et de fournir un dispositif adaptateur de courant pour modem capable de fournir un niveau de courant compatible avec tout type de modem, quel que soit le niveau de courant circulant sur la ligne téléphonique auquel il est raccordé.

Elle a donc pour objet un dispositif adaptateur de courant caractérisé en ce qu'il comporte un premier connecteur de raccordement du dispositif à une prise téléphonique, un deuxième connecteur de raccordement du dispositif à un modem, des moyens électriquement conducteurs à résistance variable de transfert de courant raccordés aux premier et deuxième connecteurs et des moyens de réglage de la résistance des moyens de transfert de courant.

Ce dispositif adaptateur peut également comporter une ou plusieurs des caractéristiques suivantes, prises isolément ou selon toutes les combinaisons techniquement possibles :
- les moyens électriquement conducteurs comportent un réseau de lignes de transfert de courant raccordées en parallèle et comportant chacune une résistance d'adaptation de courant,
- les lignes du réseau de lignes sont raccordées par une extrémité à l'un des connecteurs et par l'autre extrémité aux moyens de réglage, ces derniers comportant des moyens de sélection d'une ligne parmi le réseau de lignes,
- les moyens de sélection comportent un contacteur connecté électriquement à l'un des connecteurs et qui est monté angulairement déplaçable sous la commande d'un organe de sélection pour venir sélectivement en contact avec l'une des lignes de transfert de courant,
- l'organe de sélection comporte une vis de réglage de la position angulaire du contacteur,
- il comporte en outre un organe de mesure de courant interposé entre les premier et deuxième connecteurs et associé à un organe d'affichage de la valeur du courant circulant entre ces derniers.

L'invention a également pour objet un modem équipé d'un dispositif adaptateur de courant tel que défini ci-dessus.

D'autres caractéristiques et avantages ressortiront de la description suivante, donnée uniquement à titre d'exemple, et faite en référence aux dessins annexés sur lesquels :
- la figure 1 illustre de façon schématique une installation informatique raccordée à une prise téléphonique et dotée d'un dispositif adaptateur de courant conforme à l'invention ;
- la figure 2 est une vue en perspective du dispositif adaptateur de courant de la figure 1 ; et
- la figure 3 est un schéma du circuit électrique du boîtier de la figure 2.

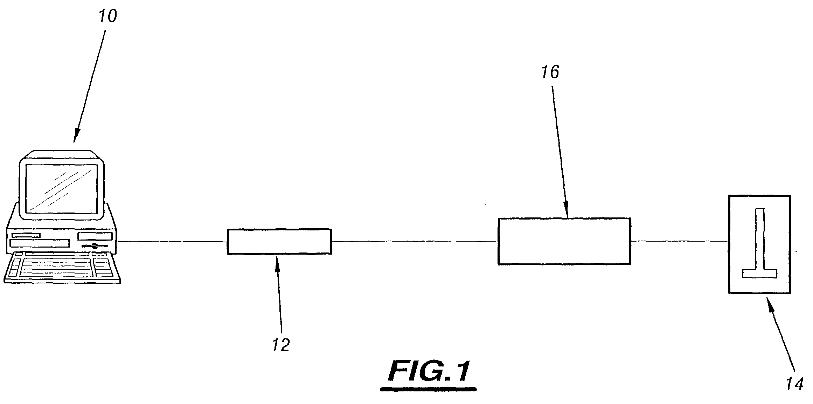

Sur la figure 1, on a représenté une vue schématique d'une installation informatique dotée d'un dispositif adaptateur de courant pour modem conforme à l'invention.

Cette installation comporte un micro-ordinateur 10, un modem 12, pouvant être intégré ou externe à celui-ci, lequel modem est raccordé à une prise téléphonique 14 par l'intermédiaire d'un dispositif 16 adaptateur de courant capable de régler le niveau du courant circulant sur la ligne téléphonique à l'intérieur d'une plage admissible pour le modem 12.

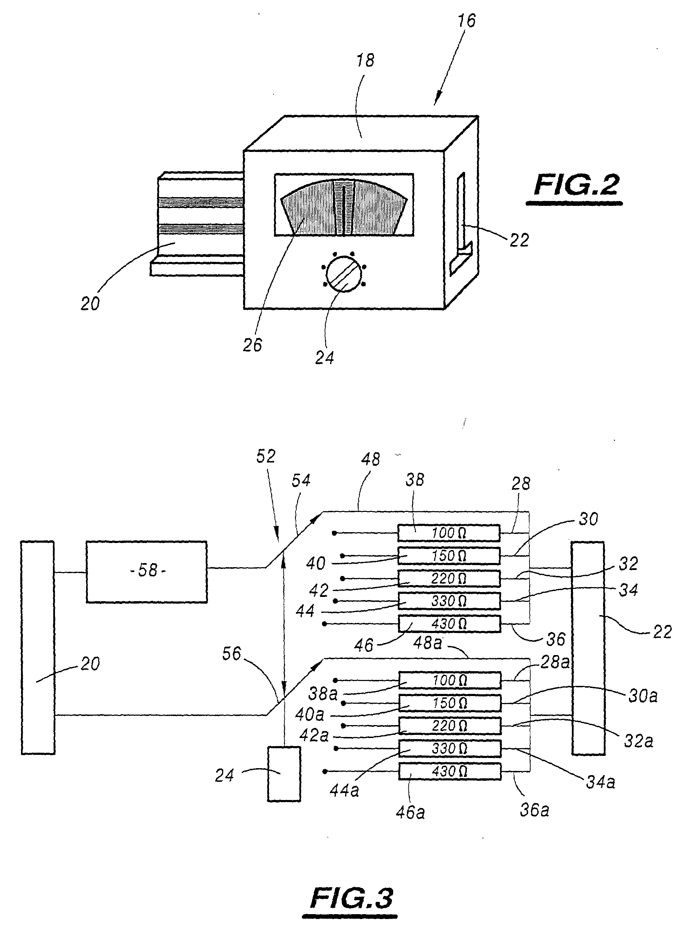

En référence à la figure 2, le dispositif adaptateur 16 comporte un boîtier 18 doté d'un premier connecteur 20 assurant le raccordement du dispositif à la prise téléphonique 14 et d'un deuxième connecteur 22 sur lequel vient se brancher le modem 12.

Les premier et deuxième connecteurs sont respectivement des connecteurs mâle et femelle. Le boîtier 18 constitue dès lors une prise gigogne et est capable de s'adapter à l'ensemble des matériels téléphoniques.

Comme cela sera décrit en détail en référence à la figure 3, le dispositif 16 comporte des moyens électriquement conducteurs à résistance variable assurant le transfert du courant entre les premier et deuxième connecteurs 20, 22 et des moyens de réglage de la résistance de ces moyens électriquement conducteurs, comportant une vis de réglage 24 accessible de l'extérieur du boîtier 18.

Il incorpore également un milliampèremètre connecté en série entre les premier et deuxième connecteurs 20, 22, lequel milliampèremètre comporte un organe d'affichage 26, par exemple de type vu-mètre, assurant l'affichage de la valeur du courant circulant dans les moyens électriquement conducteurs.

Le milliampèremètre est avantageusement connecté au sein d'un pont de diodes de type classique pour qu'il dévie toujours dans le bon sens et ce quel que soit le sens de raccordement de la ligne téléphonique, lequel pont de diodes est connecté, en parallèle avec un shunt, entre les premiers et deuxième connecteurs 20 et 22. L'ensemble constitué du milliampèremètre, du pont de diodes et du shunt est désigné par la référence 58.

En se référant à la figure 3, les moyens électriquement conducteurs interposés entre les premier et deuxième connecteurs 20, 22, comportent un réseau de lignes 28, 28-a, 30, 30-a, 32, 32-a, 34, 34-a et 36, 36-a de transfert de courant, électriquement conductrices, et raccordées en parallèle.

Chacune de ces lignes est dotée d'une résistance fixe 38, 38-a, 40, 40-a, 42, 42-a, 44, 44-a, 46 et 46-a.

Comme on le voit, le réseau de lignes comporte deux ensembles identiques de lignes, respectivement 28, 30, 32, 34, 36 et 28-a, 30-a, 32-a, 34-a, et 36-a, prévus chacun pour un fil destiné à se raccorder avec un fil correspondant de la ligne téléphonique.

On voit par ailleurs sur la figure 3 que deux lignes spécifiques, respectivement 48 et 48-a assurent le raccordement direct des premier et deuxième connecteurs 20, 22, dans une position spécifique de la vis de réglage 24 lors d'une phase préalable de mesure du courant circulant sur la ligne téléphonique.

Les moyens de réglage de la valeur de la résistance des moyens de transfert de courant comportent des moyens de sélection de l'une des lignes de transfert de courant de chaque ensemble de lignes, lesquels moyens de sélection comportent un contacteur 52 à deux balais 54 et 56 monté angulairement déplaçable sous la commande de la vis de réglage 24 pour venir chacun en contact avec une extrémité libre de l'une des lignes de transfert de courant, l'extrémité opposée étant raccordée à l'un des contacteurs.

Dans l'exemple de réalisation représenté sur la figure 3, cette extrémité est raccordée au deuxième connecteur sur lequel vient se brancher le modem.

Il serait toutefois possible, en variante, de raccorder cette extrémité au premier connecteur venant se brancher sur la prise téléphonique.

On voit enfin sur la figure 3 que l'ensemble 58 comprenant le milliampèremètre est raccordé entre le contacteur 52 et le premier connecteur 20.

Cet ensemble 58 pourrait toutefois être connecté entre les moyens électriquement conducteurs et le deuxième connecteur 22.

On notera enfin que, par exemple, les résistances montées sur chacune des lignes de transfert de courant sont choisies de manière à pouvoir régler de façon efficace le courant de ligne pour le maintenir dans une plage admissible pour le modem.

Par exemple, ces résistances ont les valeurs suivantes : 100 ohms, 150 ohms, 220 ohms, 330 ohms et 430 ohms, et ont une puissance de 1 W.

Bien entendu, la valeur de la résistance de l'une des lignes de l'un des ensembles de lignes est identique à la valeur de la ligne de l'autre ensemble de lignes qui lui correspond, le contacteur 52 étant adapté pour venir en permanence en contact avec deux lignes identiques.

Le dispositif adaptateur de courant qui vient d'être décrit s'utilise de la façon suivante.

Tout d'abord, il convient de raccorder par le connecteur 20 le dispositif 16 à la prise téléphonique 14 et d'insérer la prise du modem dans le deuxième connecteur 22.

On initialise ensuite le modem de manière à le mettre en fonctionnement. Dans cette position, la vis de réglage 24 se situe dans une position correspondant à la mise en contact du contacteur 52 avec les lignes 48 et 48-a de transfert direct de courant entre les premier et deuxième connecteurs.

On visualise alors la valeur du courant circulant sur ces lignes 48 et 48-a et l'on règle la position angulaire de la vis de réglage 24 de manière à sélectionner les lignes de transfert de courant permettant de ramener le courant au milieu de la plage admissible pour le modem.

De préférence, cette opération est réalisée une seconde fois de manière à confirmer le réglage obtenu.

Après avoir effectué ce réglage, il n'est alors plus nécessaire d'effectuer un réglage ultérieur, l'installation étant en effet configurée en fonction du courant circulant sur la ligne téléphonique.

On conçoit que l'invention qui vient d'être décrite présente une structure très simple et un coût de réalisation relativement modeste, tout en étant capable de régler efficacement le niveau de courant circulant sur une ligne téléphonique sur laquelle il est branché.

On notera enfin qu'il peut être agencé sous la forme d'un dispositif distinct du modem ou sous la forme d'un dispositif intégré à ce dernier.

## Revendications

1. Dispositif adaptateur de courant pour modem, **caractérisé en ce qu'**il comporte un premier connecteur (20) de raccordement du dispositif à une prise téléphonique (14), un deuxième connecteur (22) de raccordement du dispositif au modem (12), des moyens électriquement conducteurs (28,..., 36, 28a,..., 36a) à résistance variable de transfert de courant raccordés aux premier et deuxième connecteurs et des moyens (24, 52) de réglage de la résistance des moyens de transfert de courant.

2. Dispositif selon la revendication 1, **caractérisé en ce que** les moyens électriquement conducteurs comportent un réseau de lignes de transfert de courant raccordées en parallèle et comportant chacune une résistance (38,..., 46, 38a, ..., 46a) d'adaptation de courant.

3. Dispositif selon la revendication 2, **caractérisé en ce que** les lignes du réseau de lignes sont raccordées par une extrémité à l'un des connecteurs (22) et par l'autre extrémité aux moyens de réglage (52), et **en ce que** lesdits moyens de réglage comportent des moyens de sélection d'une ligne parmi le réseau de lignes.

4. Dispositif selon la revendication 3, **caractérisé en ce que** les moyens de sélection comportent un contacteur (52) connecté électriquement à l'un des connecteurs et qui est monté angulairement déplaçable sous la commande d'un organe de sélection (24) pour venir sélectivement en contact avec l'une des lignes de transfert de courant.

5. Dispositif selon la revendication 4, **caractérisé en ce que** l'organe de sélection (24) comporte une vis de réglage de la position angulaire du contacteur.

6. Dispositif selon l'une quelconque des revendications 1 à 5, **caractérisé en ce qu'**il comporte en outre un organe (26, 58) de mesure de courant interposé entre les premier et deuxième. connecteurs et associé à un organe d'affichage de la valeur du courant circulant entre ces derniers.

7. Modem, **caractérisé en ce qu'**il est doté d'un dispositif (16) adaptateur de courant selon l'une quelconque des revendications 1 à 6.
